# EUROPEAN PATENT APPLICATION

(11) **EP 4 722 033 A1**
(43) Date of publication of application: **08.04.2026**
(21) Application number: 25205423.4
(22) Date of filing: 29.09.2025
(51) Int. Cl.: B60N 2/16, B60N 2/18

(54) **CAR SEAT FOR ROAD CARS**

(30) Priority: 01.10.2024 IT 202400021777
(71) Applicant: FERRARI S.p.A., 41100 Modena (IT)
(72) Inventor: DUSINI, Luca, 41100 MODENA (IT); NICOLETTA, Epifanio Alberto, 41100 MODENA (IT); DI MARTINO, Gianfranco, 41100 MODENA (IT); CALI', Michele, 41100 MODENA (IT)
(74) Representative: Studio Torta S.p.A.

(57) **Abstract**

A car seat for road cars has a seat (2); and an operating assembly (6) to selectively control a height and an inclination of the seat (2) relative to a support frame of a road car; the operating assembly (6) having a pair of rear connecting rods (7) coupled in a rotary manner to the seat (2) and to the support frame, a pair of variable-length front connecting rods (11) coupled in a rotary manner to the seat (2) and to the support frame to selectively control the inclination of the seat (2) relative to the support frame, and an actuator device (17) to rotate the rear and front connecting rods (7, 11) and to selectively control the height of the seat (2) relative to the support frame.

## Description

### CROSS-REFERENCE TO RELATED APPLICATIONS

This patent application claims priority from Italian patent application no. 102024000021777, filed on October 1, 2024, the entire disclosure of which is incorporated herein by reference.

### TECHNICAL FIELD

The present invention relates to a car seat for road cars.

### BACKGROUND

In particular, the present invention relates to a car seat for road cars of the type comprising a seat; and an operating assembly to selectively control a height and an inclination of the seat relative to a support frame of a road car.

The operating assembly comprises a pair of rear connecting rods coupled to the seat in a rotary manner so as to rotate, relative to the seat, around a first rotation axis and configured to rotate, relative to the support frame, around a second rotation axis, which is parallel to the first rotation axis; and a pair of front connecting rods coupled to the seat in a rotary manner so as to rotate, relative to the seat, around a third rotation axis and configured to rotate, relative to the support frame, around a fourth rotation axis which is parallel to the third rotation axis.

Generally speaking, the rear and front connecting rods are hinged to the support frame or to respective sliding blocks coupled to the support frame itself in a sliding manner.

The operating assembly further comprises a first actuator device to move the rear and front connecting rods around the second rotation axis and, respectively, the fourth rotation axis and to selectively control the height of the seat relative to the support frame; and a second actuator device to move the seat around the first rotation axis and to selectively control the inclination of the seat relative to the support frame.

The known car seats for road cars of the type described above have several drawbacks, deriving primarily from the fact that the presence of two actuator devices to selectively control the height and, respectively, the inclination of the seat relative to the support frame of the road car results in an operating assembly having overall dimensions and a weight that are relatively high.

### SUMMARY

The object of the present invention is to provide a car seat for road cars that is free from the drawbacks described here above and that is simple and economical to manufacture. According to the present invention, a car seat for road cars is provided as claimed in the appended claims.

### BRIEF DESCRIPTION OF THE DRAWINGS

The present invention will now be described with reference to the appended drawings, which illustrate a non-limiting embodiment thereof, wherein:
Figure 1 is a schematic perspective view, with parts removed for clarity, of a preferred embodiment of the car seat for road cars;
Figure 2 is a schematic plan view, with parts removed for clarity, of the seat of Figure 1; and
Figures 3 and 4 are two schematic side views, with parts removed for clarity, of the seat of Figure 1 shown in two different operating positions.

### DESCRIPTION OF EMBODIMENTS

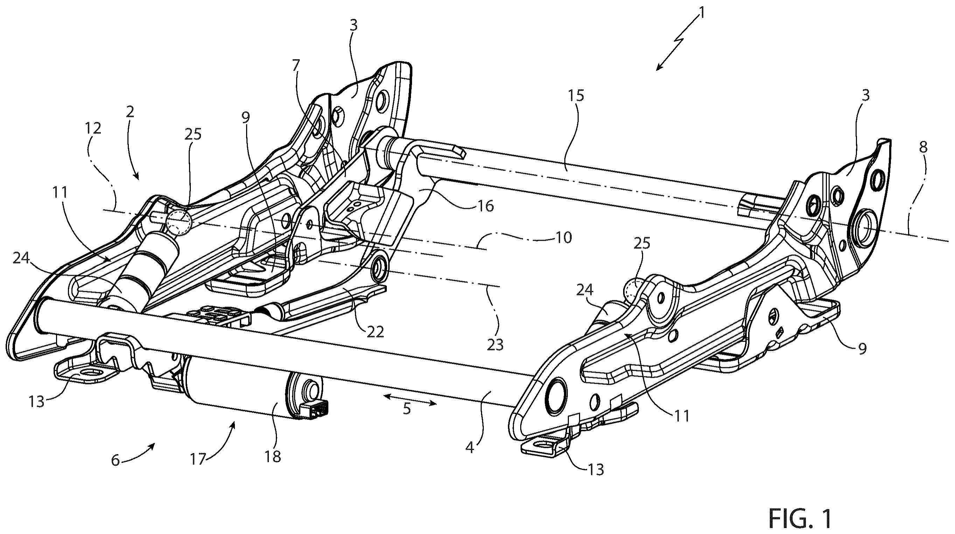

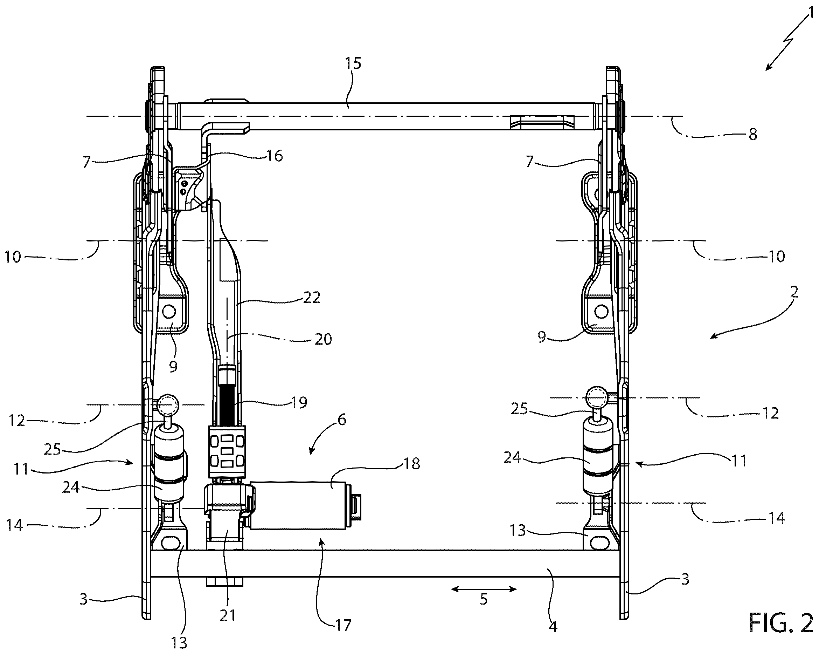

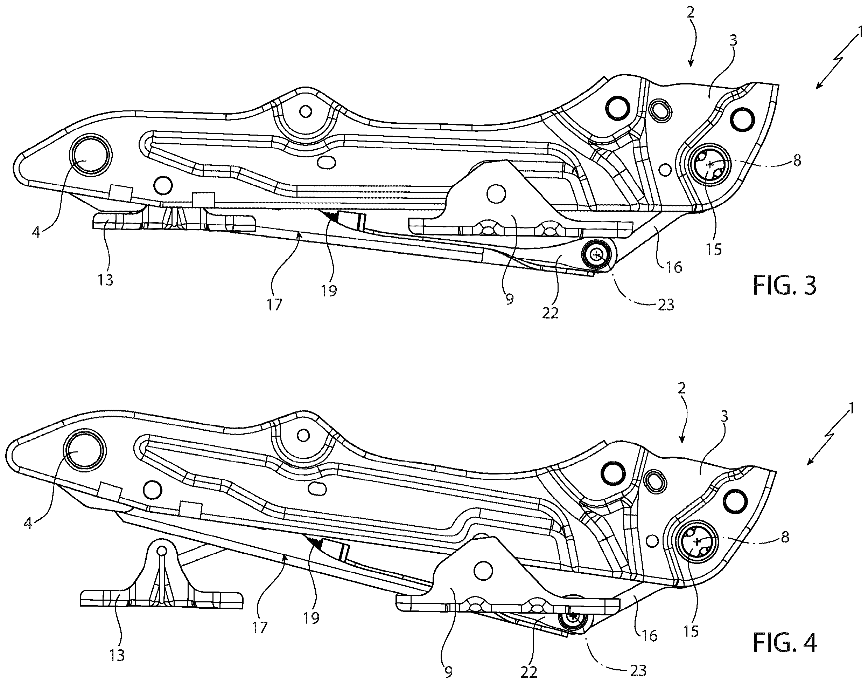

With reference to Figures 1 to 4, number 1 indicates, as a whole, a car seat for road cars comprising a seat 2, a backrest that is known and not shown, and a cushion that is known and not shown mounted on the seat 2.

The seat 2 comprises two substantially parallel support plates 3 that are connected to each other by a cross member 4 extending perpendicular to the plates 3 in a direction 5.

The seat 1 further comprises an operating assembly 6 to selectively control a height and an inclination of the seat 2 relative to the support frame (not shown) of a road car (not shown).

The assembly 6 comprises a pair of rear connecting rods 7 coupled in a rotary manner to the plates 3 so as to rotate, relative to the plates 3 themselves, around a rotation axis 8 parallel to the direction 5.

The connecting rods 7 are also coupled in a rotary manner to respective support brackets 9 so as to rotate, relative to the brackets 9, around a rotation axis 10 parallel to the axis 8 and to the direction 5.

The brackets 9 are fixed to the support frame (not shown) of the road car (not shown) when the seat 1 is longitudinally fixed or to respective sliding blocks (not shown) coupled in a sliding manner to the support frame (not shown) of the road car (not shown) when the seat 1 is longitudinally movable.

The assembly 6 further comprises a pair of front connecting rods 11 coupled in a rotary manner to the plates 3 so as to rotate, relative to the plates 3 themselves, around a rotation axis 12 parallel to the direction 5.

The connecting rods 11 are also coupled in a rotary manner to respective support brackets 13 so as to rotate, relative to the brackets 13, around a rotation axis 14 parallel to the axis 12 and to the direction 5.

The brackets 13 are fixed to the support frame (not shown) of the road car (not shown) when the seat 1 is longitudinally fixed or to respective sliding blocks (not shown) coupled in a sliding manner to the support frame (not shown) of the road car (not shown) when the seat 1 is longitudinally movable.

The connecting rods 7 project radially outwards from a cross member 15, which extends from the plates 3 coaxially to the axis 8, is engaged in a rotary manner through the connecting rods 7, and is further provided with a crank 16 projecting radially outwards from said cross member 15.

The assembly 6 is provided with an actuator device 17 to move the connecting rods 7, 11 around the relative axes 10, 14 and to selectively control the height of the seat 2 relative to the support frame (not shown) of the road car (not shown).

The device 17 comprises an electric motor 18 fixed to the cross member 4 parallel to the direction 5, and a screw 19, which is mounted so as to rotate around its own longitudinal axis 20 transversal to the direction 5, and is connected with an output shaft of the motor 18 through the interposition of a reduction gear 21.

The device 17 further comprises a tie rod 22 with elongated shape, which is coupled with the screw 19 through a screw-nut coupling so as to perform straight movements parallel to the axis 20, and is also coupled, in a rotary manner, to the crank 16 so as to rotate, relative to the crank 16, around a rotation axis 23 parallel to the direction 5.

Each connecting rod 11 is a variable-length connecting rod and comprises, in the case in question, a linear actuator 24, which is connected to the relative bracket 13 at the axis 14, and has an electric motor (not shown) provided with an output rod 25, which is connected to the relative plate 3 at the axis 12, and is movable between a retracted position and an extracted position.

In use:
when the linear actuators 24 are deactivated, the operation of the electric motor 18 causes movement of the connecting rods 7, 11 around the relative axes 10, 14 and the adjustment of the height of the seat 2 relative to the support frame (not shown) of the road car; and
when the motor 18 is deactivated, the operation of the linear actuators 24 causes movement of the seat 2 around the axis 8 and the adjustment of the inclination of the seat 2 relative to the support frame (not shown) of the road car.

The seat 1 has several advantages, deriving primarily from the fact that integration between the front connecting rods 11 and the linear actuators 24 allows an operating assembly 6 with relatively reduced overall dimensions and weight to be obtained.

## Claims

1. A car seat for road cars comprising a seat (2); and an operating assembly (6) to selectively control a height and an inclination of the seat (2) relative to a support frame of a road car; the operating assembly (6) comprising a pair of rear connecting rods (7) coupled to the seat (2) in a rotary manner so as to rotate, relative to the seat (2), around a first rotation axis (8) and configured to rotate, relative to the support frame, around a second rotation axis (10), which is parallel to the first rotation axis (8); a pair of front connecting rods (11) coupled to the seat (2) in a rotary manner so as to rotate, relative to the seat (2), around a third rotation axis (12) and configured to rotate, relative to the support frame, around a fourth rotation axis (14), which is parallel to the third rotation axis (12); and an actuator device (17) to move said rear and front connecting rods (7, 11) around the relative second and fourth rotation axis (10, 14) and to selectively control the height of the seat (2) relative to the support frame; and **characterized in that** each front connecting rod (11) is a variable-length connecting rod to move the seat (2) around the first rotation axis (8) and to selectively control the inclination of the seat (2) relative to the support frame.

2. The car seat according to claim 1, wherein each front connecting rod (11) comprises a linear actuator (24) configured to move the seat (2) around the first rotation axis (8) and to selectively control the inclination of the seat (2) relative to the support frame.

3. The car seat according to claim 2, wherein the linear actuator (24) comprises an electric motor and an output rod (25) connected to the seat (2) and coupled to an output shaft of the electric motor.

4. The car seat according to any one of the preceding claims, wherein the rear connecting rods (7) are hinged to the support frame so as to rotate around the second rotation axis (10), and wherein the front connecting rods (11) are hinged to the support frame so as to rotate around the fourth rotation axis (14).

5. The car seat according to any one of the claims from 1 to 3, wherein the rear connecting rods (7) are hinged to respective sliding blocks coupled to the support frame in a sliding manner so as to rotate around the second rotation axis (10), and wherein the front connecting rods (11) are hinged to respective sliding blocks coupled to the support frame in a sliding manner so as to rotate around the fourth rotation axis (14).

6. The car seat according to any one of the preceding claims, wherein the seat (2) comprises two side plates (3) substantially parallel to one another and a first cross member (4) to connect the side plates (3) to one another; the operating assembly (6) further comprising a second cross member (15), which extends between the side plates (3) and is engaged through the side plates (3) in a rotary manner so as to rotate, relative to the side plates (3), around the first rotation axis (8).

7. The car seat according to claim 6, wherein the actuator device (17) is fixed to the seat (2) and comprises an electric motor (18), a screw (19) connected to the electric motor (18) so as to rotate around its own longitudinal axis (20), and a tie rod (22), which is coupled to the screw (19) through a screw-nut coupling and is further coupled in a rotary manner to the second cross member (15) so as to rotate, relative to the second cross member (15), around a fifth rotation axis (23).

8. The car seat according to claim 7, wherein the second cross member (15) is provided with a crank (16), which projects from the second cross member (15) and is coupled to the tie rod (22) in a rotary manner in the area of the fifth rotation axis (23).

9. The car seat according to any one of the claims from 6 to 8, wherein the second cross member (15) carries the rear connecting rods (7) connected thereto.
